Europäisches Patentamt

European Patent Office

Office européen des brevets

(11) Veröffentlichungsnummer: **0 195 746**
**A2**

## (12) EUROPÄISCHE PATENTANMELDUNG

(21) Anmeldenummer: **86810128.8**

(22) Anmeldetag: **14.03.86**

(51) Int. Cl.⁴: **G 02 B 25/00**

(30) Priorität: **16.03.85 CH 1160/85**

(43) Veröffentlichungstag der Anmeldung:
**24.09.86 Patentblatt 86/39**

(84) Benannte Vertragsstaaten:
**AT DE FR GB IT NL SE**

(71) Anmelder: **Canzek, Ludvik, Dr.**
**Quellmattstrasse 3**
**CH-5035 Unterentfelden(CH)**

(72) Erfinder: **Canzek, Ludvik, Dr.**
**Quellmattstrasse 3**
**CH-5035 Unterentfelden(CH)**

(54) **Lupe mit kurzer Baulaenge.**

(57) Eine sechslinsige Lupe umfasst in Richtung Gegenstand - Auge eine Meniskuslinse, eine Zerstreuungs- und eine Sammellinse sowie ein dreilinsiges Kittglied. Sie ist kurz gebaut, hat niedriges Gewicht und einen betragsmässig grossen Petzvalradius (-6.3f).

Die Lupe eignet sich besonders für Anwendungen in der Optoelektronik, d. h. zum Betrachten von Objekten auf einer nicht gekrümmten Anoden-fläche einer elektronischen Röhre, wobei das durch diese Lupe entstandene Bild anastigmatisch und eben ist.

EP 0 195 746 A2

## LUPE MIT KURZER BAULAENGE

Die Erfindung betrifft eine Lupe gemäss Oberbegriff des Patentanspruchs 1.

Lupen dieser Art sind bekannt. Sie werden vorwiegend in optoelektronischen Geräten verwendet, wo das Bild auf einer Fläche hinter der Anode einer elektronischen Röhre betrachtet wird. Diese Fläche kann gekrümmt oder eben sein. Für gekrümmte Flächen muss die Bildfeldkrümmung der Lupe nicht gleich Null, sondern etwa der Krümmung der Fläche gleich sein. Diese Anforderung erleichtert die Berechnung einer Lupe wesentlich. Ist aber die erwähnte Fläche eben, dann muss die Bildfeldkrümmung (und der Astigmatismus) der Lupe weitgehend beseitigt werden. Dies kann nur ereicht werden, wenn der Petzvalradius der Lupe zahlenmässig gross ist. Zusätzliche Erschwerung bei der Berechnung einer Lupe für ebene Objektfläche stellt die Tatsache dar, dass für Lupen dieser Art meistens ein grosser Bildwinkel verlangt wird, da die Röhren mit der planen Fläche in der Regel grössere Durchmesser haben als Röhren mit gekrümmter Fläche.

Eine Lupe dieser Art soll nicht nur bis zum Bildrand scharfe Abbildung ermöglichen, sie soll auch kurz gebaut und leicht ein; man baut sie meistens in tragbare Nachtsicht- bzw. Wärmebildgeräte ein.

Zum Stand der Technik wird CH-B-441806 genannt. Diese Schrift beschreibt eine siebenlinsige Lupe mit grossem Absolutwert des Petzvalradius, die somit für ein ebenes Objekt korrigierbar ist. Ihr grosser Nachteil liegt aber in der ausgesprochen grossen Baulänge von 2.36f. Darüber hinaus werden hier auch schwere Gläser verwendet, ihre Durchschnittsdichte beträgt über 4 g/cm3.

In der noch nicht veröffentlichten EP-Anmeldung Nr. 84810442.8 ist eine fünflinsige Lupe mit kurzer Baulänge von 1.27f und leichten Gläsern angegeben. Ihr Petzvalradius beträgt aber -1.37f, was eine erhebliche Bildfeldkrümmung bzw. grosse Unschärfe ausserhalb der Bildmitte verursacht, wenn man sie für die Betrachtung von ebenen Objekten braucht. Diese Lupe ist daher nur bei den Röhren mit gekrümmter Anodenfläche verwendbar.

Ausgehend vom beschriebenen Stand der Technik liegt der Erfindung die Aufgabe zugrunde, eine Lupe zu berechnen, bei der die Bildfeldkrümmung weitgehend korrigierbar ist, die also einen betragsmässig grossen Petzvalradius und gleichzeitig eine kurze Baulänge und niedriges Gewicht hat.

Die diese Aufgabe erfindungsgemäss lösende Lupe ist im Patentanspruch 1 definiert. Bevorzugte Ausführungsformen der Lupe sind in den Ansprüchen 2 bis 5 angegeben.

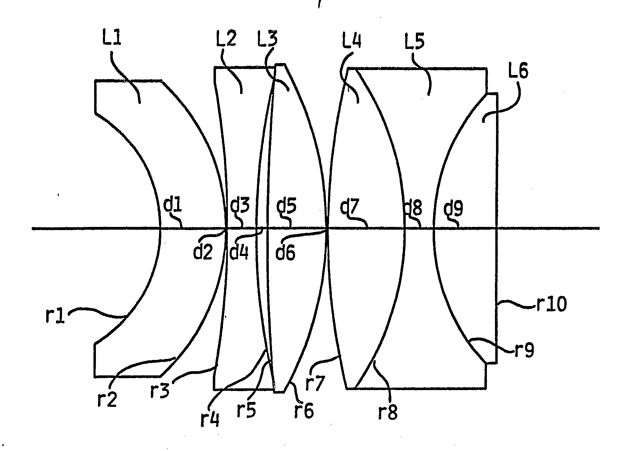

Die Erfindung wird nachfolgend anhand der Zeichnung und des Ausführungsbeispiels gemäss der Tabelle des Patentanspruchs 5 näher erklärt.

Die Zeichnung zeigt die erfindungsgemässe Lupe in schematischer Darstellung. Den objektseitigen Teil bildet die Meniskuslinse L1, der mittlere Teil besteht aus Linsen L2 und L3. Der augenseitige Teil beinhaltet eine einzige Zerstreuungslinse L5, eine Sammellinse ist dagegen in zwei Linsen L4 und L6 aufgeteilt. Der Tabelle des Anspruchs 5 ist zu entnehmen, dass die Meniskuslinse L1 dünner als 0.45f ist.

Das Ausführungsbeispiel hat im Vergleich zu CH-B-441806 eine Baulänge von nur 1.00f, eine Durchschnittsdichte der verwendeten Gläser unter 3.6 g/cm3 und noch eine Linse weniger. Eine einfache und billige Ausführung ist auch durch das Aufeinanderlegen der Linsen L2 und L3, sowie durch das Zusammenkitten der Linsen L4, L5 und L6 gewährleistet.

Optische Berechnungen zeigen einen sehr guten Korrektionszustand bis an den Bildrand auch für Bildwinkel von weit über 40 Grad, denn der Petzvalradius des angeführten Beispiels beträgt -6.3f.

0195746

PATENTANSPRUECHE

1. Lupe mit der Brennweite f, bestehend aus einem objektseitigen, einem mittleren und einem augenseitigen Teil, dadurch gekennzeichnet, dass der objektseitige Teil eine Meniskuslinse (L1) mit der Hohlseite zum Objekt aufweist, dass der mittlere Teil eine Zerstreuungs- (L2) und eine Sammellinse (L3) beinhaltet, dass der augenseitige Teil aus mindestens einer Sammel- (L4) und einer Zerstreuungslinse (L5) besteht, dass die Dicke d1 der Meniskuslinse (L1) kleiner als 0.45f ist und dass der absolute Wert des Petzvalradius grösser als 1.5f ist.

2. Lupe nach Patentanspruch 1, dadurch gekennzeichnet, dass eine der Sammellinsen mit der benachbarten Zerstreuungslinse nicht verkittet ist und dass der Abstand zwischen diesen Linsen kleiner als 0.45f ist.

3. Lupe nach Patentanspruch 1, dadurch gekennzeichnet, dass die Baulänge des Linsensystems maximal 2f beträgt.

4. Lupe nach Patentanspruch 1, dadurch gekennzeichnet, dass der augenseitige Teil zwei Sammellinsen (L4, L6) aufweist.

5. Lupe nach einem der Patentansprüche 1 bis 4, gekennzeichnet durch folgende auf Brennweite f = 1.00 für Wellenlänge 515 nm bezogene Daten:

| Fläche Nr. | Radius r | Abstand d | Glasart |
|---|---|---|---|
| 1 | -0.456 | 0.213 | FN11 |
| 2 | -0.717 | 0.005 | |
| 3 | -2.068 | 0.093 | FN11 |
| 4 | 4.235 | 0.034 | |
| 5 | -22.478 | 0.181 | LAFN21 |
| 6 | -0.993 | 0.005 | |
| 7 | 1.506 | 0.218 | LAFN21 |
| 8 | -1.318 | 0.093 | SFN64 |
| 9 | 0.765 | 0.157 | LAFN21 |
| 10 | 14.561 | | |

6. Lupe nach einem der Patentansprüche 1 bis 5, dadurch gekennzeichnet, dass die Brechzahl nd der stärksten Sammellinse im System grösser als 1.55 ist und dass die Brechzahl nd der stärksten Zerstreuungslinse im System kleiner als 1.80 ist, wobei nd die Brechzahl für Wellenlänge 515 nm ist.

7. Lupe nach einem der Patentansprüche 1 bis 6, dadurch gekennzeichnet, dass sie als Okular verwendet wird.